**Europäisches Patentamt**

**European Patent Office**

**Office européen des brevets**

(19)

(11) Veröffentlichungsnummer: **0 297 082**
**B1**

(12) **EUROPÄISCHE PATENTSCHRIFT**

(45) Veröffentlichungstag der Patentschrift:
**27.12.90**

(21) Anmeldenummer: **88890152.7**

(22) Anmeldetag: **13.06.88**

(51) Int. Cl.⁵: **G01N 35/00,** G01N 1/10,
G01N 33/84

(54) **Analysengerät.**

(30) Priorität: **17.06.87  AT 1552/87**

(43) Veröffentlichungstag der Anmeldung:
**28.12.88 Patentblatt 88/52**

(45) Bekanntmachung des Hinweises auf die Patenterteilung:
**27.12.90 Patentblatt 90/52**

(84) Benannte Vertragsstaaten:
**DE FR GB**

(56) Entgegenhaltungen:
**DE-A- 2 521 061**
**DE-A- 2 528 819**
**DE-A- 2 538 010**
**DE-A- 2 758 061**
**FR-A- 2 140 908**
**US-A- 3 874 850**

(73) Patentinhaber: **AVL Medical Instruments AG,
Stettemerstrasse 28, CH-8207 Schaffhausen(CH)**

(72) Erfinder: **Marsoner, Hermann, Dipl.-Ing., Dr.,
Roseggersiedlung 2, A-8153 Steinberg(AT)**
Erfinder: **Rüther, Horst, Dr., Eisteichgasse 20/35,
A-8042 Graz(AT)**

(74) Vertreter: **Krause, Walter, Dr. Dipl.-Ing. et al,
Postfach 200 Singerstrasse 8, A-1010 Wien(AT)**

**Beschreibung**

Die Erfindung bezieht sich auf ein Analysengerät, insbesondere zur Untersuchung von Körperflüssigkeitsproben, bei dem eine Probeneingabeeinrichtung und ein Meßkanal vorgesehen sind wobei im Meßkanal Meßsonden angeordnet sind und wobei der Meßkanal mittels eines Ventils von einem mit einem Probeneinfüllstützen verbundenen Vorratsraum abtrennbar ist.

Derartige Geräte sind beispielsweise aus dem medizinischen Laborbetrieb bekannt, wo sie zur Blutgasanalyse oder sonstigen Messungen an in flüssiger Form vorliegenden Proben verwendet werden. Die bekannten Geräte können nach der Art der Probeneingabeeinrichtung unterschieden werden, u.zw. in solche, die nur eine Eingabe mit einer Kapillare und solche, die eine Eingabe mit einer Spritze erlauben. Bei den bekannten Geräten ist es schwierig, für eine stets gleiche Behandlung der Proben zu sorgen, was für eine Reproduzierbarkeit der Messung wesentlich ist.

Aus US-A 3 874 850 ist es bekannt, zwischen der Probeeingabeeinrichtung und dem Meßkanal eines automatischen Blutanalysators einen Vorratsraum vorzusehen, dessen Verbindung zum Meßkanal durch ein Ventil gesteuert ist. Bei Einbringung der Probe mittels einer Spitze können überschüssige Probenreste über eine zwischen Vorratsraum und Steuerventil abzweigende Bypaßleitung in einen Abfallbehälter abgeleitet werden. Zur Messung wird die Probe aus dem Vorratsraum in den eigentlichem Meßkanal gesogen. Für Kalibrier- und Probenmedien werden unterschiedliche Wege verwendet. Zum Betrieb des Geräts ist zwischen dem Vorratsraum und dem Einfüllstutzen ein weiteres Ventil nötig, wobei durch die Verbindungsleitung zwischen den Elementen ein relativ komplizierter, nicht gasdichter Probenweg realisiert ist.

Ziel der Erfindung ist es, ein Analysengerät der eingangs erwähnten Art vorzuschlagen, bei dem auf einfache Weise eine Behandlung ohne oder nur mit vernachlässigbarer Kontamination der Proben möglich ist.

Erfindungsgemäß wird dies durch die Merkmale des Anspruchs 1 erreicht.

Diese Maßnahmen ermöglichen es, jeder Probe unabhängig von deren Eingabe in das Gerät aus dem Vorratsraum in den Meßkanal überzuführen. Dabei ist auf einfache Weise die Möglichkeit zur Behandlung der Proben gegeben, die zweckmäßigerweise in dem Vorratsraum und somit unmittelbar vor dem Meßkanal erfolgen kann.

Dabei kann vorgesehen sein, daß der Vorratsraum in einem Block aus Metall eingearbeitet ist.

Dies ermöglicht es auf einfache Weise, die einzelnen Proben vor der Messung stets auf die gleiche bzw. eine kontrollierte Temperatur zu bringen, wobei aber ein Ausgasen der Probe verhindert ist.

Um insbesondere bei Blutanalysen ein Verlegen des Meßkanales zu vermeiden, kann weiters vorgesehen sein, daß der Querschnitt, zumindest aber die kleinste Abmessung des Querschnittes des Meßkanales wesentlich kleiner als der Querschnitt des Vorratsraumes ist, wobei das Verhältnis vozugsweise 1:3 bis 1:5 beträgt.

Durch diese Maßnahmen kann das Eindringen von Koagulat in den Meßkanal vermieden werden.

Eine bevorzugte Ausführungsform der Erfindung ist im Anspruch 3 angegeben.

Durch diese Maßnahmen wird es auf einfache Weise ermöglicht, das Gerät nach einer bestimmten Anzahl von Proben zu reinigen und zu kalibrieren, wobei es bei letzterem bereits im Vorratsraum zu einer vorbestimmten Gaskonzentration kommt, sodaß der Einfluß auf die zu messende Probe beim Transport in den Meßkanal bekannt ist bzw. gering gehalten werden kann. Außerdem ergibt sich dadurch auch ein sehr einfacher und übersichtlicher Aufbau des Gerätes.

Bei einem Anschluß einer Unterdruckquelle ist es auch möglich, im Anschlußereich und bei dem Andockkörper bzw. der Andockscheibe hängen bleibende Tröpfchen abzusaugen, wodurch eine allfällige Vermischung einer Probe mit Resten einer Reinigungsflüssigkeit sicher vermieden wird.

Die Anordnung einer Dichtscheibe an der Andockscheibe ermöglicht es, in dem zwischen der Andockscheibe bzw. dem Einfüllstutzen und einer dem Meßkanal nachgeordneten Vakuumpumpe gelegenen Abschnitt des Gerätes einen Unterdruck aufzubauen und danach durch rasches Freigeben des Einfüllstutzens eine starke Luftströmung im Puffer- und im Meßkanal zu erzeugen, der allenfalls vorhandene Ablagerungen fortreißt.

Nach einer Weiterbildung der Erfindung kann vorgesehen sein, daß zwischen dem Anschluß der Gaszuleitung an der Probeneingabeeinrichtung und der Gasquelle ein Befeuchter zwischengeschaltet ist, wobei in die, das befeuchtete Gas führende Leitung, gegebenenfalls ein zweites oder mehrere Gase über ein oder mehrere Mischventile zumischbar sind.

Durch diese Maßnahmen ist es auf einfache Weise möglich, die im Meßkanal angeordneten Fühler auch im Stand-by Betrieb entsprechend feucht zu halten, sodaß diese einsatzbereit bleiben und eine Austrocknung vermieden wird. Bei der Anordnung eines Mischventiles kann auch sehr einfach eine Kalibrierung, z.B. einer im Meßkanal angeordneten Kette von Gassensoren mit zwei verschiedenen Gasen bzw. Gasgemischen erfolgen.

Um auch dabei stets gleiche Verhältnisse im Hinblick auf die Temperatur sicherstellen zu können, kann weiters vorgesehen sein, daß die das befeuchtete Gas führende Leitung mit einer Heizeinrichtung versehen ist. Dabei kann auch im Stand-by Betrieb der Vorratsraum und der Meßkanal, die beide vom Gas bzw. Gasgemisch durchströmt sind, auf konstanter Temperatur gehalten werden.

Im Hinblick auf eine einfache Reinigungsmöglichkeit des Analysengerätes kann weiters vorgesehen sein, daß zwischen dem den Meßkanal vom Vorratsraum trennenden bzw. verbindenden Ventil und dem Vorratsraum eine Bypass-Leitung in einen den Vorratsraum mit dem Meßkanal verbundenen Verbindungskanal mündet, welche Leitung mit einem mit Unterdruck beaufschlagbaren Abfallbehälter verbunden ist und in der gegebenenfalls ein Ventil angeordnet ist, über das eine Probe in den Verbindungskanal einspritzbar ist.

Dies ermöglicht es, den Vorratsraum vorerst alleine zu reinigen, wobei die Reinigungsflüssigkeit über die Probeneingabeeinrichtung zugeführt und über die Bypass-Leitung abgeführt werden kann. Danach kann der Meßkanal mit der Reinigungsflüssigkeit durchströmt und so gereingt werden.

Weiters ist es mittels der Bypass-Leitung und des in dieser angeordneten Ventiles möglich, eine Einzelprobe in den Vorratsraum einzubringen, wobei während des Einspritzens der Probe das den Vorratsraum mit dem Meßkanal verbindende Ventil geschlossen ist.

Bei einem Analysengerät mit einer im Meßkanal angeordneten pH-Wert-Meßeinrichtung mit einer Referenz-Elektrode kann nach einer Weiterbildung der Erfindung vorgesehen sein, daß die Referenz-Elektrode über ein feinporiges Diaphragma mit dem Meßkanal in Verbindung steht und im Inneren der Referenz-Elektrode eine bis zum Diaphragma erstreckende Kapillare vorgesehen ist, wobei die Referenz-Elektrode im wesentlichen geschlossen ausgebildet und über Leitungen mit einem tiefer als die Referenz-Elektrode angeordneten Elektrolytenbehälter und dem Abfallbehälter verbunden ist.

Durch diese Maßnahmen wird eine unkontrollierte Vermischung des Elektrolyten mit der zu messenden Probe vermieden. So kann zwar durch den sich aufgrund der tieferen Anordnung des Elektrolytenbehälters in der Referenz-Elektrode ausbildenden hydrostatischen Unterdruckes eine geringe Menge der Probe in die Kapillare hineinziehen, doch kann diese geringe Menge während eines Waschvorganges im Meßkanal, bei dem in diesem vorzugsweise ein Unterdruck herrscht, leicht wieder in den Meßkanal durch das Diaphragma hindurch abgegeben und mit der Waschflüssigkeit abgeführt werden. Dies kann, falls erforderlich, durch eine Druckbeaufschlagung der Referenz-Elektrode unterstützt werden.

Die Erfindung wird nun anhand der Zeichnung näher erläutert. Dabei zeigt:

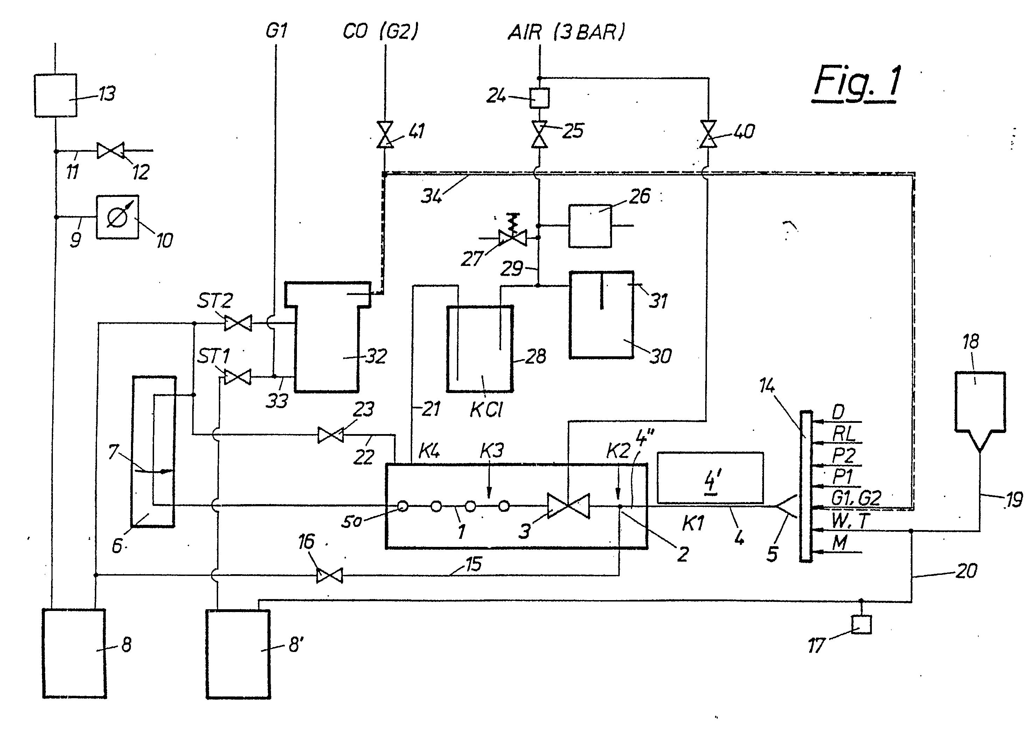

Fig. 1 schematisch ein erfindungsgemäßes Analysengerät, und
Fig. 2 eine erfindungsgemäße Referenz-Elektrode für die pH-Wert-Messung.

Der Meßkanal 1 ist über einen ein Ventil 3 aufweisenden Verbindungskanal 4″ mit einem Vorratsraum 4 verbunden. Zwischen Ventil 3 und Vorratsraum 4 mündet an der Verzweigung 2 eine Bypass-Leitung 15 in den Verbindungskanal 4″ wobei der Vorratsraum 4 in einem mit einer Heizung versehenen Block 4′ aus Metall eingearbeitet und daher temperierbar und gasdicht ist. Beschickt werden kann dieser Vorratsraum 4 über den auswechselbaren Einfüllstutzen 5, der an einer Andockscheibe 14 anliegt, an deren anderer Seite Anschlüsse für eine Reinigungslösung RL, Gaszuführungen G1, G2 und für eine Reinigungsflüssigkeit W,T und eine Unterdruckquelle 18 angeordnet sind. Diese Andockscheibe 14 bildet die Probeneingabeeinrichtung des Analysengerätes. Durch Verdrehen und An- und Abdocken der Andockscheibe kann jeweils ein Anschluß bzw. eine Probe mit dem Einfüllstutzen 5 in Verbindung gebracht werden.

An der von der Probeneingabeeinrichtung abgekehrten Seite des Meßkanals 1 ist dieser mit einer Schlauchpumpe 6 mit beweglichem Anpreßbügel 7 verbunden, welche Schlauchpumpe 6 mit einem unterdruckdichten bzw. unterdruckfesten Abfallbehälter 8 verbunden ist. Dieser ist mit einer Vakuumpumpe 13 und über eine Stichleitung 9 mit einem Unterdrucksensor 10 verbunden.

Die Eingabe der Proben oder der Reinigungslösung oder -flüssigkeit in den Meßkanal 1 kann durch Einsaugen mittels der Schlauchpumpe 6 oder durch Einspritzen in die Bypass-Leitung 15 bei geschlossenem Ventil 3 erfolgen, wobei in letzterem Falle das Ventil 16 in der Leitung 15 entsprechend gesteuert sein muß, sodaß die Bypass-Leitung zum Abfallbehälter 8 hin offen ist. Dabei herrscht der Grundzustand des Gerätes, bei dem die Vakuumpumpe außer Betrieb und der Abfallbehälter 8 mit der Umgebung verbunden ist.

Mit dem Anschluß W,T der Andockscheibe ist ein Behälter 8′ mit einer Reinigungsflüssigkeit z.B. Wasser verbunden, wobei in der entsprechenden Verbindungsleitung 20 eine Blende 17 eingebaut ist, über die Luft in die Reinigungsflüssigkeit eingesogen werden kann. Diese Vermischung führt zu erhöhten Turbulenzen, wodurch der Reinigungseffekt gesteigert und der Verbrauch an Flüssigkeit verringert wird. Von dieser Verbindungsleitung 20 zweigt eine Stichleitung 19 zu einem Unterdruckbehälter 18 ab.

Das den Meßkanal 1 steuernde pneumatische Ventil 3 wird über ein Gasventil 40 und eine entsprechende Leitung mit Antriebsluft versorgt.

An der entsprechenden Druckluftquelle ist über eine Blende 24 und ein weiteres Gasventil 25 und ein Überdruckventil 27 ein Vorratsbehälter 28 für den Elektrolyten, insbesondere eine KCl-Lösung, und eine Druckablaßdüse 31 über eine Leitung 29 angeschlossen. Dieser Druckablaßdüse 31 ist ein Tröpfchenfänger 30 vorgeschaltet, der durch ein Gefäß mit einer den direkten Weg zwischen einer Einlaßöffnung und der Druckablaßdüse 31 unterbrechenden Prallplatte besteht. Weiters ist an der Leitung 29 bzw. einer von dieser abzweigenden Stichleitung eine Überdruck-Regeleinheit 26 angeschlossen.

Der Vorratsbehälter 28 ist tiefer als der Meßkanal 1 angeordnet, der mit einer pH-Wert-Meßstrecke bestückt ist, deren Referenz-Elektrode 50 über die Leitung 21 mit dem Vorratsbehälter 28 und der Leitung 22 mit dem Abfallbehälter 8 verbunden ist. Dabei ist in der Leitung 22 ein Ventil 23 angeordnet.

Die Gasquelle G1, die z.B. ein definiertes Gasgemisch liefert, ist über eine Leitung 33 mit einem Befeuchter 32 verbunden, wobei an diese Leitung über ein Ventil ST1 der Wasserbehälter 8′ angeschlossen ist, sodaß der Befeuchter 32 über das Ventil ST1 nachgefüllt werden kann. Der Befeuchter ist weiters mit dem Abfallbehälter 8 über ein Ventil ST2 und über die mit einer Heizung versehenen Leitung 34 mit der Andockscheibe 14 verbunden, zu der das befeuchtete Gas gelangt.

In diese Leitung 34 ist über das Ventil 41 ein zweites Gas wahlweise einspeisbar, wobei aber der Anteil des zugemischten zweiten Gases, das nicht befeuchtet ist, zweckmäßigerweise klein gehalten wird.

Der Meßablauf gestaltet sich derart, daß nach der Meßwertbestimmung die durch die Probe kontaminierten Probenwege gewaschen und getrocknet werden. Anschließend wird ein Kalibriergas durch den Meßkanal 1 hindurchströmen gelassen, wozu die Andockscheibe 14 in die entsprechende Stellung gebracht wird. Damit ist eine 1-Punkt-Kalibrierung der im Meßkanal angeordneten Gassensoren möglich. Wie bereits erwähnt, strömt auch während des Stand-by Betriebes ständig befeuchtetes Gas durch den Meßkanal, um die Sensoren vor einer Austrocknung zu schützen.

Durch eine nicht dargestellte Steuereinrichtung kann eine solche 1-Punkt-Kalibrierung in bestimmten Zeitabständen automatisch erfolgen, wobei zur Kalibrierung der pH-Meßkette eine Pufferlösung nach der entsprechenden Positionierung der Andockscheibe 14 mit der Schlauchpumpe 6 durch den Meßkanal hindurchgesogen wird.

Weiters können auch, von einem entsprechenden Programmablauf gesteuert, in regelmäßigen Abständen 2-Punkt-Kalibrierungen in gleicher Weise wie die 1-Punkt-Kalibrierungen durchgeführt werden.

Die Proben werden unabhängig davon, ob diese über die Probeneingabeeinrichtung, d.h. die Andockscheibe 14, durch Einsaugen oder über die Bypass-Leitung 15 eingespritzt werden, wobei das Ventil 3 geschlossen ist in dem Vorratsraum 4, der mit einer Heizung versehen ist, auf eine bestimmte Temperatur gebracht, bevor sie in den Meßkanal 1 weitergeleitet und ausgewertet werden. Der Vorratsraum ist dabei so kurz wie möglich, aber ausreichend lang bemessen, um eine genügend große Restprobe aufnehmen zu können. Um insbesondere bei Untersuchungen von Blutproben eine Verlegung des Meßkanals 1 durch Koagulat zu vermeiden, ist der Meßkanal im Querschnitt wesentlich kleiner dimensioniert als der Vorratsraum 4 und die Bypass-Leitung 15, sodaß möglichst kein Koagulat in den Meßkanal gelangt.

Bei dem erfindungsgemäßen Analysengerät durchströmen sowohl die Proben, wie auch das Kalibriergas, den Vorratsraum und den Meßkanal, wodurch für beide die gleichen Verhältnisse gegeben sind. Dabei wird die Probe aufgrund der Begasung mit dem Kalibriergas vor dem Einfluß allfällig im Puffer- oder Meßkanal anwesender nicht spezifizierter Gase geschützt.

Beim Waschvorgang wird zuerst der Vorratsraum 4 gewaschen, wobei das Waschwasser, das über die Andockscheibe 14 zugeführt wird, über die Bypass-Leitung 15 abgeführt wird, wobei das Ventil 16 die Verbindung zum Abfallbehälter herstellt. Dabei wird der Transport des Waschwassers durch den von der Vakuumpumpe 13 aufrecht erhaltenen Unterdruck sichergestellt. Zur Erhöhung der Reinigungswirkung kann dem Wasser, wie bereits erwähnt, über die Blende 17 Luft zugesetzt werden.

Im Anschluß an die Reinigung des Vorratsraums 4 wird die Reinigungsflüssigkeit mittels der Schlauchpumpe 6 durch den Meßkanal hindurchgesogen, wobei das Ventil 16 die Leitung 15 absperrt.

Während des Waschvorganges arbeitet die Vakuumpumpe, und der Abfallbehälter steht dabei unter einem Unterdruck, der sich über die die Andockscheibe 14 mit dem Wasserbehälter 8' verbindende Leitung 20 und die Stichleitung 19 auch auf den Vakuumbehälter 18 auswirkt. Dies ermöglicht ein Absaugen der Resttröpfchen vom Einfüllstutzen 5, nachdem zur Beendigung des Waschvorganges die Leitung 20 abgesperrt wird, aber die Vakuumpumpe weiterläuft. Dabei werden die Resttröpfchen von dem im Inneren des Vakuumbehälters 18 aufgebauten Unterdruck über die Stichleitung 19 und die Leitung 20 abgesaugt.

Die Trocknung der Probenwege erfolgt mittels eines durch die Vakuumpumpe 13 erzeugten Luftstromes, der abwechselnd über die Bypass-Leitung 15 und den Meßkanal geleitet wird. Dadurch ist es auch möglich, die Resttröpfchen aus dem Bereich der Verzweigung 2 zu entfernen. Nach dem Waschvorgang kann eine Reinigungslösung in den Meßkanal gesaugt weden, um Ablagerungen zu entfernen. Dieser Vorgang kann durch ein Programm gesteuert in bestimmten Zeitabständen wiederholt werden.

Die bei dem erfindungsgemäßen Analysengerät stets gleichbleibende Positionierung der Proben trägt wesentlich zur guten Reproduzierbarkeit der Ergebnisse bei. Erfaßt werden die Proben mittels Kontaktstrecken, die den elektrischen Widerstand der Probe messen. Diese Kontaktstrecken K1-K2, K2-K4 und K3-K4 erlauben eine Erfassung der Proben bzw. deren Menge.

Das an der Andockscheibe 14 angeordnete Dichtplättchen D ermöglicht es, den Einfüllstutzen 5 dicht abzuschließen und mittels der Vakuumpumpe 13 einen Unterdruck in dem der Andockscheibe 14 nachgeordneten Bereich des Gerätes, insbesondere im Bereich des Vorratsraumes 4 und Meßkanales 1 zu erzeugen. Durch rasches Entfernen des Dichtplättchens D kann in diesem Bereich eine sehr hohe Luftströmung erreicht werden, mit der allfällig vorhandene Ablagerungen mitgerissen werden.

Die zu messende Probe kann mittels einer Kapillare, die an dem Anschluß M der Andockscheibe angeschlossen werden kann, eingebracht werden.

Die Anschlüsse P1, P2 dienen zur Zufuhr von Pufferlösungen und die Anschlüsse G1 und G2 zur Zufuhr von Gasgemischen zur Kalibrierung und zum Schutz der Proben beim Transport zum Meßkanal 1 hin.

Über den Anschluß RL ist eine Reinigungslösung und über den Anschluß W,T eine Reinigungsflüssigkeit z.B. Wasser, in den Vorratsraum 4 und Meßkanal 1 einbringbar, wobei über den letzteren auch ein das Trocknen beschleunigendes Absaugen von Resttröpfchen möglich ist.

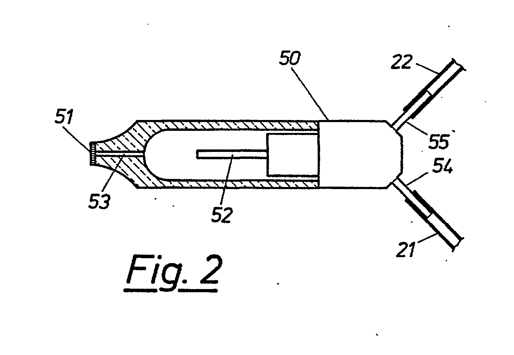

Bei der im Meßkanal angeordneten pH-Wert-Meßstrecke ist eine Referenz-Elektrode 50 vorgesehen, die in der Fig. 2 näher dargestellt ist. Diese weist in üblicher Weise eine Elektolytbrücke, vorzugsweise eine KCl-Brücke zwischen der im Meßkanal 1 befindlichen Probe und der eigentlichen Elektrode 52 auf. Der Abschluß dieser Elektrode ist durch ein feinporiges Diaphragma 51 gebildet, durch das zu Beginn jeder Messung bzw. pH-Wert-Kalibrierung eine kleine Dosis KCl hindurchgedrückt werden kann. Da während der Messung aufgrund der tieferen Anordnung des KCl-Vorratbehälters 28 im Inneren der Referenz-Elektrode ein hydrostatischer Unterdruck herrscht, kann Probenflüssigkeit in die Referenz-Elektrode über das Diaphragma 51 eindringen. Dabei gelangt die Probenflüssigkeit in die unmittelbar hinter dem Diaphragma 51 beginnende Kapillare 53, wodurch eine unerwünschte Vermischung des Elektrolyten mit der Probenflüssigkeit vermieden wird. Die eingedrungene Probenflüssigkeit tritt beim Waschvorgang, bei dem im Meßkanal ein Unterdruck herrscht, wieder aus und kann weggeschwemmt werden.

Die Referenz-Elektrode 50 stellt, wie aus der Fig. 2 zu ersehen ist, ein geschlossenes System dar. Dabei ist der obere Nippel 55, der in nicht dargestellter Weise zwangspositioniert ist, mit dem Abfallbehälter 8 über den Schlauch 22 verbunden, der im Normalfall durch das Ventil 23, das vorzugsweise als Quetschventil ausgebildet ist, abgesperrt ist. Lediglich bei einer Neubefüllung der Referenz-Elektrode wird die Verbindung über den Schlauch 22 geöffnet. Für den Schlauch 22 wird ein gaspermeables Material verwendet, um eine Auskristallisation im Bereich des Ventiles zu vermeiden. Dabei ist der Schlauch 22 möglichst kurz bemessen, um die Ausgasung und den Elektrolytverbrauch gering zu halten.

Der für den Transport des Elektrolyten bzw. des KCl notwendige Überdruck wird aus dem geregelten Druck des integrierten Gasmischsystems abgeleitet, wobei der Luftdruck an eine Blende 24 angelegt wird, die den Durchfluß begrenzt. Das Ventil 25 sperrt im Normalfall den Luftstrom, sodaß nur wenig Luft verbraucht wird. Da das Ventil der Blende nachgeschaltet ist, kommt es zu einem sehr raschen Druckanstieg beim Öffnen des Ventiles 25. Übersteigt der Druckwert den zuvor an der Überdruck-Regeleinheit 26 eingestellten Wert, so wird über diese Regeleinheit soviel Luft abgelassen, wie notwendig ist, um den eingestellten Wert zu erreichen. Dieser Druck gelangt in den druckdichten Behälter 28 und pflanzt sich über die Leitung 21 bis zum unteren Nippel 54 der Referenz-Elektrode 50 fort.

Im Falle der Füllung der Referenz-Elektrode wird das Ventil 23 geöffnet und so ein Weitertransport des KCl ermöglicht. Bei einer pH-Messung bleibt dagegen das Ventil 23 während des Druckstoßes geschlossen, wobei dieser ein Austreiben allfälliger in die Kapillare 53 eingedrungener Probenflüssigkeit bewirkt.

Diese Düse ist so bemessen, daß sie während der Druckphase keinen nennenswerten Einfluß ausübt, jedoch nach dem Schließen des Ventiles 25 für einen raschen Druckabfall sorgt, wodurch die Dauer eines Druckstoßes begrenzt wird.

## Patentansprüche

1. Analysengerät, insbesondere zur Untersuchung von Körperflüssigkeitsproben, bei dem eine Probeneingabeeinrichtung (5, 14) und ein Meßkanal (1) vorgesehen sind, wobei im Meßkanal Meßsonden angeordnet sind und und wobei der Meßkanal mittels eines Ventils (3) von einem mit einem Probeneinfüllstutzen (5) verbundenen vorratsraum (4) abtrennbar ist, dadurch gekennzeichnet, daß der Vorratsraum (4) den ersten Teil der Verbindungsleitung vom Einfüllstutzen (5) bis zum Meßkanal (1) bildet, gasundurchlässig und beheizbar ausgebildet ist sowie daß die Probeneingabeeinrichtung eine Andockscheibe (14) aufweist, über welche der Einfüllstutzen (5) wahlweise mit Zuleitung (RL, P2, P1, G1, G2, W, T) für gasförmige und flüssige Kalibrier- und Reinigungsmedien und mit einen Anschluß (M) für die Probe verbindbar ist.

2. Analysengerät nach Anspruch 1, dadurch gekennzeichnet, daß der Vorratsraum (4) in einem Block (4') aus Metall eingearbeitet ist.

3. Analysengerät nach einem der Ansprüche 1 oder 2, dadurch gekennzeichnet, daß die Probeneingabeeinrichtung durch einen Andockkörper, vorzugsweise eine drehbar angeordnete Andockscheibe (14) gebildet ist, an deren einer Seite die Anschlüsse für mindestens eine Kalibrierlösung sowie für eine Reinigungsflüssigkeit, mindestens eine Gaszuleitung (G1, G2), der Anschluß für eine Unterdruckquelle (18) und eine Dichtscheibe (D) angeordnet sind und deren andere Seite an den Einfüllstutzen (5) andockbar ist.

4. Analysengerät nach Anspruch 1, 2 oder 3, dadurch gekennzeichnet, daß zwischen dem Anschluß der Gaszuleitung (G1, G2) an die Andockscheibe (14) und einer Gasquelle ein Befeuchter (32) zwischengeschaltet ist, wobei in die das befeuchtete Gas führende Leitung (34) gegebenenfalls ein zweites Gas über ein Mischventil (41) zumischbar ist.

5. Analysengerät nach Anspruche 4, dadurch gekennzeichnet, daß die das befeuchtete Gas führende Leitung (34) mit einer Heizeinrichtung versehen ist.

6. Analysengerät nach einem der Ansprüche 1 bis 5, dadurch gekennzeichnet, daß der Querschnitt, zumindest aber die kleinste Abmessung des Querschnittes des Meßkanals (1) wesentlich kleiner als der Querschnitt des Vorratsraumes (4) ist, wobei des Verhältnis vorzugsweise 1 : 3 bis 1 : 5 beträgt.

7. Analysengerät nach einem der Ansprüche 1 bis 6 dadurch gekennzeichnet, daß im Meßkanal eine pH-Wert-Meßeinrichtung mit einer Referenz-Elektrode (50) angeordnet ist, und daß die Referenz-Elektrode (50) über ein feinporiges Diaphragma (51) mit dem Meßkanal in Verbindung steht und im Inneren der Referenz-Elektrode eine bis zum Diaphragma (51) erstreckende Kapillare (53) vorgesehen ist, wobei die Referenz-Elektrode im wesentlichen geschlossen ausgebildet und über Leitungen (21, 22) mit einem tiefer als die Referenz-Elektrode angeordneten Elektrolytenbehälter (28) und dem Abfallbehälter (8) verbunden ist.

## Claims

1. An analysing apparatus, primarily designed for the purpose of analysing samples of body fluids, which is provided with a sample feeding device (5, 14) and a measuring channel (1), the latter containing measuring probes and being separable by means of a valve (3) from a storage tank (4) connected with a sample inlet stub (5), wherein the storage tank (4) consitutes the first part of the connecting line from the inlet stub (5) to the measuring channel (1), and is configured as a gas-tight and heatable container, and wherein the sample feeding device has a docking disk (14), via which the inlet stub (5) can be connected alternatively with fittings (RL, P2, P1, G1, G2, W, T) for gaseous and liquid calibrating and cleaning media and with a fitting (M) for the sample.

2. An analysing apparatus as in claim 1, wherein the storage tank (4) is contained in a metal block (4').

3. An analysing apparatus as in claim 1 or 2, wherein the sample feeding device is constituted by a rotatable docking disk (14) carrying on one of its sides the fittings for one or more calibrating solutions and for a cleansing liquid and for one or more gas feed pipes (G1, G2) and for a vacuum source (18), as well as a sealing platelet (D), whereas its other side may be docked to the inlet stub (5).

4. An analysing apparatus as in claim 1, 2 or 3, wherein a humidifier (32) provided between the fitting of the gas feed pipe (G1, G2) on the docking disk (14) and a gas source, where an additional gas may be injected via a mixing valve (41) into the pipe (34) carrying the humidified gas.

5. An analysing apparatus as in claim 4, wherein the pipe (34) carrying the humidified gas is provided with a heating unit.

6. An analysing apparatus as in any of claims 1 to 5, wherein the cross-section, or at least the smallest dimension of the cross-section of the measuring channel (1), is considerably smaller than the cross-section of the storage tank (4), the ratio preferably being 1:3 to 1:5.

7. An analysing apparatus as in any of claims 1 to 6, wherein a pH measuring device with a reference electrode (50) is contained in the measuring channel (1), and wherein the reference electrode (50) is connected with the measuring channel via a fine-pored diaphragm (51), and wherein a capillary tube leading up to the diaphragm (51) is provided inside the reference electrode (50), the reference electrode being basically configured as a closed electrode which is connected by lines (21, 22) to an electrolyte tank (28) placed at a position lower than the reference electrode, and to the waste tank (8).

## Revendications

1. Appareil d'analyse d'échantillons liquides, en particulier pour l'analyse d'échantillons de liquide corporel, comprenant un dispositif d'introduction d'échantillon (5, 14) et un canal de mesure (1), équipé de sonde de mesure, ce canal pouvant être isolé au moyen d'une soupape (3) d'un espace de stockage (4) relié à une tubulure d'introduction d'échantillon (5), appareil caractérisé en ce que l'espace de stockage (4) formant la première partie de la conduite de liaison entre la tubulure de remplissage (5) et le canal de mesure (1), est perméable au gaz et peut être chauffé et en ce que le dispositif d'introduction d'échantillon comporte un disque d'amarrage (14) qui peut être relié sélectivement, par les tubulures de remplissage (5), à des conduites d'amenés (RL, P2, P1, G1, G2, W, T) pour des milieux de calibrage et de nettoyage gazeux et liquides et peut être relié à un raccord (M) pour l'échantillon.

2. Appareil d'analyse selon la revendication 1, caractérisé en ce que l'espace de stockage (4) est usiné dans le bloc (4') en métal.

3. Appareil d'analyse selon l'une des revendications 1 et 2, caractérisé en ce que le dispositif d'introduction d'échantillons est constitué d'un disque d'amarrage (14) rotatif, dont un côté comporte les raccords pour au moins une solution de calibrage ainsi que pour un liquide de nettoyage, au moins une conduite d'amenée de gaz (G1, G2), le raccord pour une source de dépression (18) et un disque d'étanchéité (D), l'autre côté pouvant être relié aux tubulures de remplissage (5).

4. Appareil d'analyse selon la revendication 1, 2 ou 3, caractérisé en ce qu'entre le raccordement de la conduite de gaz (G1, G) au disque d'amarrage (14) et une source de gaz, il est prévu un humidificateur (32) et dans la conduite (34) traversée par le gaz humidifié on peut le cas échéant mélanger un second gaz par l'intermédiaire d'une soupape de mélange (41).

5. Appareil d'analyse selon la revendication 4, caractérisé en ce que la canalisation (34) amenant le gaz humidifié est munie d'un moyen de chauffage.

6. Appareil d'analyse selon l'une des revendications 1 à 5, caractérisé en ce que la section et au moins la plus petite dimension de la section du canal de mesure (1) est beaucoup plus petite que la section de l'espace de stockage (4), le rapport étant de préférence compris entre 1:3 et 1:5.

7. Appareil d'analyse selon l'une des revendications 1 à 6, caractérisé par un dispositif de mesure de pH avec une électrode de référence (50), placée dans le canal de mesure, et l'électrode de référence (50) communique avec le canal de mesure par un diaphragme (51) à pores fins et à l'intérieur de l'électrode de référence il est prévu un capillaire (53) allant jusqu'au diaphragme (51), l'électrode de référence, essentiellement fermée, étant reliée par les canalisations (21, 22) à un récipient d'électrolyte (28) disposé plus profondément que l'électrode de référence et au récipient de déchets (8).

_Fig. 1_

G1  CO (G2)  AIR (3 BAR)

EP 0 297 082 B1

_Fig. 2_